(19) Europäisches Patentamt
European Patent Office
Office européen des brevets

(11) **EP 4 760 348 A2**

(12) **EUROPÄISCHE PATENTANMELDUNG**

(43) Veröffentlichungstag:
**17.06.2026  Patentblatt 2026/25**

(51) Internationale Patentklassifikation (IPC):
**G01S 11/12** (2006.01)    **G01S 17/74** (2006.01)

(21) Anmeldenummer: **25216933.9**

(52) Gemeinsame Patentklassifikation (CPC):
**G01S 11/12; G01S 17/74**

(22) Anmeldetag: **19.11.2025**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH LA MA MD TN**

(30) Priorität:  **12.12.2024  DE 102024137434**

(71) Anmelder: **SICK AG
79183 Waldkirch (DE)**

(72) Erfinder:
• **MARRA, Martin
79280 Au (DE)**
• **MÖSSNER, Markus Bernd
79115 Freiburg (DE)**
• **BRUCKER, Frank
79312 Emmendingen (DE)**
• **REINER, Gernot
79211 Denzlingen (DE)**

(74) Vertreter: **Manitz Finsterwald
Patent- und Rechtsanwaltspartnerschaft mbB
Martin-Greif-Straße 1
80336 München (DE)**

(54)  **VERFAHREN ZUR SIMULTANEN DATENÜBERTRAGUNG UND ABSTANDSMESSUNG**

(57)      Die Erfindung betrifft ein Verfahren zur simultanen Datenübertragung und Abstandsmessung zwischen einer ersten Vorrichtung und einer zweiten Vorrichtung, wobei die erste Vorrichtung und die zweite Vorrichtung jeweils eine zur optischen Datenübertragung ausgebildete Sendeeinrichtung, eine zum optischen Datenempfang ausgebildete Empfangseinrichtung und eine mit der Sendeeinrichtung und der Empfangseinrichtung gekoppelte und/oder zumindest zum Teil integrierte Steuereinheit aufweisen, wobei von der ersten Vorrichtung an die zweite Vorrichtung ein Datensignal übertragen wird. Das Verfahren zeichnet sich dadurch aus, dass aus dem Datensignal ein Empfangstaktsignal erzeugt wird, welches Takt-Informationen des Datensignals angibt, wobei die Phasenlage des Empfangstaktsignals ermittelt wird und aus der Phasenlage der Abstand zwischen der ersten Vorrichtung und der zweiten Vorrichtung ermittelt wird.

Fig. 1

EP 4 760 348 A2

**Beschreibung**

Die vorliegende Erfindung betrifft ein Verfahren zur simultanen Datenübertragung und Abstandsmessung zwischen einer ersten Vorrichtung und einer zweiten Vorrichtung, wobei die erste Vorrichtung und die zweite Vorrichtung jeweils eine zur optischen Datenübertragung ausgebildete Sendeeinrichtung, eine zum optischen Datenempfang ausgebildete Empfangseinrichtung und eine mit der Sendeeinrichtung und der Empfangseinrichtung gekoppelte und/oder zumindest zum Teil integrierte Steuereinheit aufweisen. Dabei wird von der ersten Vorrichtung an die zweite Vorrichtung ein Datensignal übertragen.

Verfahren zur gleichzeitigen Datenübertragung und Abstandsmessung kommen beispielsweise in Hochregallagern zum Einsatz, wobei insbesondere fahrerlose Fahrzeuge (z.B. Regalbediengeräte, RBGs) mit einer Basisstation eine kontinuierliche Datenverbindung aufbauen, um zwischen der Basisstation und dem fahrerlosen Fahrzeug zum einen Steuer- und/oder Sensordaten zu übertragen und zum anderen die Position des Fahrzeugs (d.h. den Abstand zur Basisstation) möglichst genau zu bestimmen.

Ein solches Verfahren zur simultanen Datenübertragung und Abstandsmessung ist beispielsweise aus der DE 10 2014 111 589 A1 bekannt. Bei dem dortigen Verfahren erfolgt eine absichtliche Verschiebung der Systemtakte zusammen mit einer deutlichen Überabtastung, um eine genaue Abstandsmessung zu erreichen.

Ein solches Vorgehen ist allerdings nur bei niedrigeren Datenraten möglich, da bei zu hohen Datenraten im Datensignal eine deutliche Überabtastung üblicherweise nicht mehr möglich ist.

Es ist daher eine der Erfindung zugrundeliegende Aufgabe, ein Verfahren zur simultanen Datenübertragung und Abstandsmessung anzugeben, welches eine sehr genaue Abstandsmessung auch bei hohen Datenraten, beispielsweise bei zumindest ein Gigabit pro Sekunde (1 Gbit/s), ermöglicht.

Diese Aufgabe wird durch ein Verfahren gemäß Anspruch 1 gelöst.

Das erfindungsgemäße Verfahren zeichnet sich dadurch aus, dass, insbesondere durch die zweite Vorrichtung, aus dem Datensignal ein Empfangstaktsignal erzeugt wird, welches Takt-Informationen des Datensignals angibt, wobei die Phasenlage des Empfangstaktsignals ermittelt wird und, insbesondere zumindest, aus der Phasenlage der Abstand zwischen der ersten Vorrichtung und der zweiten Vorrichtung ermittelt wird.

Die Erfindung setzt auf der Erkenntnis auf, dass die Verwendung nicht des Datensignals selbst, sondern lediglich der Takt-Informationen des Datensignals auch bei hohen Datenraten eine sehr genaue Abstandsmessung gestattet. Überdies ist erfindungsgemäß von Vorteil, dass die herkömmlicherweise für den Empfang eines solchen Datensignals notwendige Hardware ebenfalls für die Abstandsmessung und insbesondere für die Erzeugung des Empfangstaktsignals verwendet werden kann.

Nachfolgend werden weitere Details der Erfindung beschrieben.

Das erfindungsgemäße Verfahren dient der simultanen Datenübertragung und Abstandsmessung zwischen einer ersten Vorrichtung und einer zweiten Vorrichtung.

Bei der ersten Vorrichtung kann es sich beispielsweise um die oben erwähnte Basisstation und bei der zweiten Vorrichtung um eine an einem fahrerlosen Fahrzeug angebrachte Vorrichtung handeln. Grundsätzlich können die erste und zweite Vorrichtung aber identisch aufgebaut sein.

Die erste Vorrichtung und die zweite Vorrichtung können beispielsweise einen maximalen Abstand von 100 m, 300 m oder 500 m zueinander aufweisen. Jede der Vorrichtungen umfasst eine zur optischen Datenübertragung ausgebildete Sendeeinrichtung und eine zum optischen Datenempfang ausgebildete Empfangseinrichtung. Sende- und Empfangseinrichtung können auch als eine Einheit ausgebildet sein und einen Transceiver bilden. Die Sendeeinrichtung und die Empfangseinrichtung (oder der Transceiver) sind mit der Steuereinheit über eine Datenverbindung gekoppelt und/oder sind zumindest zum Teil in die Steuereinheit integriert. Beispielsweise kann ein Lichtsender der Sendeeinrichtung (z.B. eine Laserdiode oder eine LED) und ein Lichtempfänger der Empfangseinrichtung (z.B. eine Photodiode) mit der Steuereinheit gekoppelt und z.B. an einem Aus- bzw. Eingang der Steuereinheit angeschlossen sein. Eine Erzeugung von Signalen für den Lichtsender und/oder eine Verarbeitung von Signalen des Lichtempfängers kann in der Steuereinheit, d.h. integriert, erfolgen.

Im Betrieb der Vorrichtungen wird ein Datensignal optisch von der ersten Vorrichtung an die zweite Vorrichtung übertragen. Zudem ist es möglich, dass auch die zweite Vorrichtung an die erste Vorrichtung ein Datensignal optisch überträgt. Das Datensignal wird von der jeweiligen Sendeeinrichtung optisch ausgesandt und von der Empfangseinrichtung der jeweils anderen Vorrichtung optisch empfangen.

Das Datensignal (und auch die weiter unten beschriebenen weiteren Datensignale) enthalten insbesondere Nutzdaten, beispielsweise Steuerdaten für ein (fahrerloses) Fahrzeug oder Sensordaten. Bevorzugt ist ein von der ersten Vorrichtung an die zweite Vorrichtung übertragenes Datensignal unterschiedlich von einem von der zweiten Vorrichtung an die erste Vorrichtung übertragenen Datensignal. Es erfolgt also keine bloße Reflexion des Datensignals an der ersten oder zweiten Vorrichtung. Die mit den Datensignalen zwischen den Vorrichtungen übertragenen Informationen können mittels On-Off-Keying (OOK) binär codiert sein, d.h. ein Lichtsender Sendeeinrichtung ist z.B. eingeschaltet, wenn eine binäre 1 übertragen wird und ausgeschaltet, wenn eine binäre 0 gesendet wird. Der Lichtsender kann als Laser, insbesondere als Laserdiode, ausgebildet sein.

Das Datensignal umfasst bevorzugt ein serielles Datensignal, insbesondere mit den beschriebenen Nutzdaten.

Bevorzugt wird nur ein einziger Kommunikationskanal, nämlich der Kommunikationskanal zur optischen Datenübertragung zwischen den beiden Vorrichtungen, verwendet, um sowohl die Datenübertragung als auch die Abstandsmessung zu realisieren. Es besteht eine Punkt-zu-Punkt-Verbindung zwischen den beiden Vorrichtungen. Insbesondere besteht eine direkte Sichtverbindung zwischen den beiden Vorrichtungen.

Zur Abstandsmessung kann die Zeit bestimmt werden, die ein Datenbit eines Datensignals von der ersten Vorrichtung zur zweiten Vorrichtung oder umgekehrt benötigt. Aus der konstanten Ausbreitungsgeschwindigkeit des durch Licht übertragenden Datensignals (d.h. der Lichtgeschwindigkeit) kann dann der Abstand zwischen der ersten und der zweiten Vorrichtung ermittelt werden, was zum Beispiel von einer der Steuereinheiten vorgenommen werden kann, die entsprechend ausgestaltet ist.

Erfindungsgemäß wird aus dem Datensignal ein Empfangstaktsignal erzeugt bzw. rekonstruiert. Das Empfangstaktsignal umfasst bevorzugt Takt-Informationen, d.h. Timing-Informationen, des Datensignals. Die Takt- bzw. Timing-Informationen können beispielsweise bei seriellen Signalen die Rekonstruktion der seriellen Signale in der Empfangseinrichtung und/oder in der Steuereinheit der empfangenden Vorrichtung ermöglichen. Bei dem Empfangstaktsignal kann es sich beispielsweise um ein Rechtecksignal handeln, dessen Flanken die zeitliche Position der einzelnen Datenbits im Datensignal angeben. Erfindungsgemäß wird allgemein die Phasenlage des Empfangstaktsignals ermittelt und/oder ausgewertet, wobei die Phasenlage beispielsweise durch eine Auswertung der Position der Flanken des Empfangstaktsignals erfolgen kann.

Durch die erfindungsgemäße Ermittlung oder Auswertung der Phasenlage kann eine deutlich genauere Bestimmung des Abstands (d.h. der Entfernung) zwischen der ersten Vorrichtung und der zweiten Vorrichtung erfolgen, als dies beispielsweise über lediglich die Auswertung von übertragenen Symbolen, Bytes, Wörtern oder Zeitstempeln möglich wäre. Der ermittelte Abstand kann dann als Abstands- oder Distanzsignal von zumindest einer der Vorrichtungen ausgegeben und insbesondere beim Betrieb der Vorrichtung oder eines mit der Vorrichtung ausgestatteten Fahrzeugs verwendet werden.

Die erfindungsgemäß notwendige Erzeugung des Empfangstaktsignals und/oder die Auswertung der Phasenlage kann teilweise oder vollständig in der Steuereinheit erfolgen. Das dem Empfangstaktsignal zugrundeliegende Datensignal weist bevorzugt eine Datenrate von zumindest 1 Gigabit pro Sekunde oder von zumindest 1,3 Gbit/s auf.

Vorteilhafte Ausführungsformen der Erfindung sind der Beschreibung, den Zeichnungen sowie den Unteransprüchen zu entnehmen.

Gemäß einer ersten Ausführungsform umfasst das Empfangstaktsignal ein Clock-Data-Recovery-Signal (CDR-Signal). Das CDR-Signal kann beispielsweise durch eine PLL-Schaltung (Phase-Lock-Loop-Schaltung) erzeugt werden.

Eine Einheit, welche das CDR-Signal erzeugt, kann insbesondere in der Empfangseinheit und/oder in der Steuereinheit vorhanden sein und es ermöglichen, die seriellen Signale in dem Datensignal auf der Empfängerseite zu rekonstruieren.

Das Empfangstaktsignal kann direkt das CDR-Signal sein, das CDR-Signal umfassen oder von dem CDR-Signal abgeleitet sein. Bevorzugt umfasst das Empfangstaktsignal keine der Nutzdaten aus dem Datensignal. Beispielsweise kann es sich bei dem Empfangstaktsignal um ein Rechtecksignal ohne Dateninformationen handeln. Das Rechtecksignal kann beispielsweise nur sich im gleichen Abstand wiederholende gleiche Rechteckpulse aufweisen.

Im Unterschied zu dem Empfangstaktsignal umfasst das Datensignal also Nutzdaten, die auf das Datensignal aufmoduliert sein können.

Gemäß einer weiteren Ausführungsform wird das Empfangstaktsignal (in seiner Frequenz) um einen vorbestimmten Faktor heruntergeteilt, bevorzugt durch einen Seriell-zu-Parallel-Umsetzer. Alternativ oder zusätzlich zu dem Seriell-zu-Parallel-Umsetzer kann auch ein Frequenzteiler verwendet werden. Beispielsweise kann es sich bei dem Seriell-zu-Parallel-Umsetzer um einen 20 Bit-Umsetzer handeln. Durch diesen kann die Frequenz des Empfangstaktsignals bzw. die Häufigkeit der Flanken im Empfangstaktsignal um den vorbestimmten Faktor (hier z.B. 20) heruntergeteilt werden.

Anstelle des Zahlenwerts von 20 für den vorbestimmten Faktor sind auch Zahlenwerte von beispielsweise 5, 10, 15, 25, 36, 50, 64, 100 oder 132 möglich. Insbesondere ist der vorbestimmte Faktor der Wert der Anzahl von Bits, welche ein Datenwort oder ein Byte in dem (optischen) Datensignal codieren. Der vorbestimmte Faktor kann auch in einem Bereich zwischen dem halben und dem doppelten vorgenannten Wert liegen. Bei der später noch genannten Verwendung des 8B10B-Verfahrens als Codierung, wird ein Datenwort durch zwei Bytes dargestellt, sodass ein Datenwort jeweils mit 20 Bits codiert wird, sodass in diesem Fall der vorbestimmte Faktor 20 ist.

Das Herunterteilen des Empfangstaktsignals um den vorbestimmten Faktor dient insbesondere dazu, ein späteres Abtasten des Empfangstaktsignals zu vereinfachen, wie später noch beschrieben wird.

Gemäß einer weiteren Ausführungsform wird das Empfangstaktsignal an einem Ausgang der Steuereinheit ausgegeben und, bevorzugt an einem Eingang der (selben) Steuereinheit, wieder eingetastet. Bei der Steuereinheit kann es sich insbesondere um einen, insbesondere einzigen, FPGA (Field Programmable Gate Array), einen, insbesondere einzigen, ASIC (Application Specific Integrated Circuit) oder allgemein um eine, insbesondere einzige, integrierte Schaltung handeln. Bei dem Ausgang und dem Eingang der Steuereinheit kann es sich beispielsweise um einen Ausgangs-Pin bzw. einen Eingangs-Pin handeln. Alternativ ist es möglich, dass der Ausgang (z.B. der Ausgangs-Pin) der Steuereinheit direkt ab- bzw. eingetastet werden kann, sodass das Empfangstaktsignal dann nicht physisch nach Außerhalb der Steuereinheit geführt werden muss.

Das Ausgeben und das danach erfolgende Wiedereingeben bzw. Wiedereintasten des Empfangstaktsignals besitzt den Vorteil, dass für die Erfassung der Phasenlage geeignete Hardware in der Steuereinheit verwendet werden kann, die eine sehr hochauflösende Erfassung ermöglicht, welche aber üblicherweise nur an dedizierten Eingängen der Steuereinheit vorhanden ist. Der Ausgang und der Eingang der Steuereinheit können dementsprechend zu derselben integrierten Schaltung gehören.

Alternativ kann der Eingang auch an einer anderen integrierten Schaltung, beispielsweise einer externen Auswertungseinheit angeordnet sein, so dass das Empfangstaktsignal an die externe Auswertungseinheit übertragen wird.

Gemäß einer weiteren Ausführungsform umfasst das Empfangstaktsignal eine Vielzahl von Flanken, wobei zur Ermittlung der Phasenlage zumindest zwei, bevorzugt drei, besonders bevorzugt vier, Flanken abgetastet und/oder ausgewertet werden.

Insbesondere wird die genannte Vielzahl an Flanken in einem Abtastvorgang als Verbund abgetastet (also z.B. gleichzeitig und/oder als gemeinsames Signal).

Bei den vorgenannten Anzahlen von Flanken kann es sich um Mindestangaben handeln, es ist aber auch möglich, dass jeweils genau die genannte Anzahl von Flanken abgetastet und/oder ausgewertet wird. Höhere Zahlen von Flanken, mit welchen auf die gleiche Art und Weise verfahren wird, sind ebenfalls denkbar, beispielsweise 6, 8, 10, 15, 20, 32 oder auch 64 Flanken.

Gemäß einer weiteren Ausführungsform wird die Flankensteilheit von, insbesondere allen, Flanken des Empfangstaktsignals vor der Ermittlung der Phasenlage reduziert, bevorzugt durch ein Verzögerungsglied. Es erfolgt also eine künstliche bzw. absichtliche Reduzierung der Flankensteilheit der Flanken in dem Empfangstaktsignal. Dies dient dem Zweck, mehr Abtastpunkte auf der Flanke abbilden zu können.

Insbesondere kann die Steuereinheit ausgebildet sein, eine jeweilige Flanke des Empfangstaktsignals mit mehreren Abtastpunkten abzutasten, beispielsweise mit zumindest vier, acht oder zwölf Abtastpunkten auf der jeweiligen Flanke.

Zusätzlich oder alternativ zu dem Verzögerungsglied (beispielsweise einem IO-Delay-Block) kann auch ein Operationsverstärker, ein Logikgatter oder ähnliches zur Reduzierung der Flankensteilheit eingesetzt werden.

Durch das Verzögerungsglied und/oder eine zusätzliche Jitter-Einheit kann alternativ oder zusätzlich zur Reduzierung der Flankensteilheit der Flanken in dem Empfangstaktsignal das Empfangstaktsignal mit einem synthetischen Jitter versehen werden. Der synthetische Jitter kann einstellbar sein, beispielsweise in einem Bereich von 4 ps bis 60 ps oder von 2 ps bis 100 ps. Der synthetische Jitter kann zwischen verschiedenen Abtastvorgängen zur Ermittlung der Phasenlage verändert werden. Da die Größe des synthetische Jitters bekannt ist, kann der synthetische Jitter bei der Ermittlung der Phasenlage berücksichtigt (und z.B. herausgerechnet) werden. Durch die Veränderung des synthetische Jitters können die Flanken zwischen verschiedenen Abtastvorgängen leicht verschoben werden, sodass Abtastpunkte vor und nach einer Flanke aber auch direkt auf der Flanke liegen können.

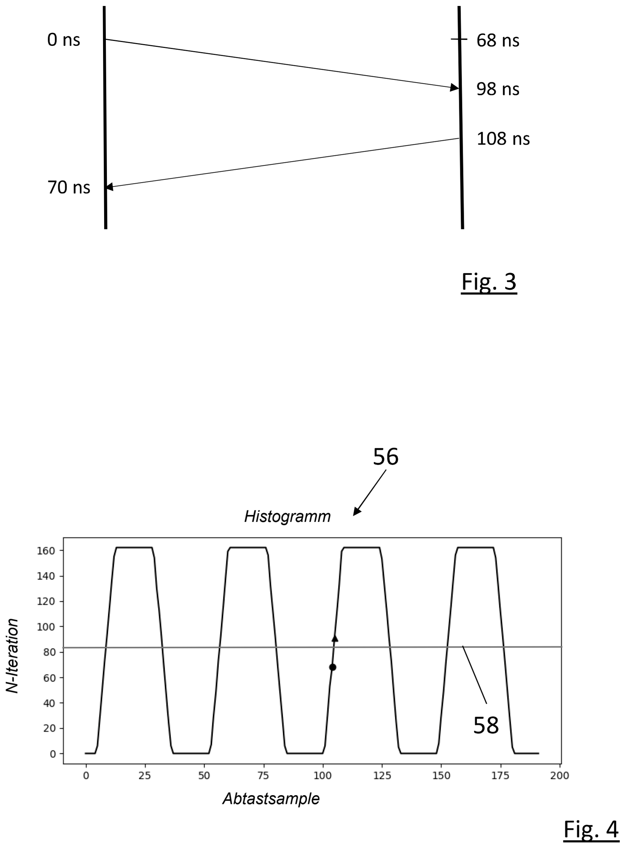

Insbesondere können so Abtastpunkte auf einer Flanke generiert werden, die nicht nur dem Wert des Empfangstaktsignals vor oder nach einer Flanke entsprechen (also z.B. 0 oder 1), sondern auch Zwischenwerte annehmen können, also "analoge" Werte darstellen. Beispielsweise aufgrund der Zwischenwerte kann die Position der Flanke dann noch genauer bestimmt werden, indem z.B. die Position des Nulldurchgangs (entsprechend beispielsweise der N/2-Schwelle in Fig. 4) genauer anhand der Zwischenwerte bestimmt werden kann.

Gemäß einer weiteren Ausführungsform erfolgt zur Ermittlung der Phasenlage zumindest ein Abtastvorgang, insbesondere ein binärer Abtastvorgang, wobei bevorzugt jeweils mehrere Flanken des Empfangstaktsignals gleichzeitig oder gemeinsam abgetastet werden, bevorzugt durch eine Double-Data-Rate-Schaltung (DDR-Schaltung).

Durch den Abtastvorgang wird die Phasenlage ermittelt, insbesondere indem die genaue zeitliche Position einer oder mehrerer Flanken des Empfangstaktsignals ermittelt wird.

Durch die DDR-Schaltung kann sowohl eine fallende als auch eine steigende Flanke ausgewertet werden. Beispielsweise können vier Takte zusammen abgetastet oder ausgewertet werden. Hierdurch können dann vier Takte mit zwei Flanken resultierend mit einer 8-fachen Abtastrate abgetastet werden. Die 8-fache Abtastrate ist insbesondere im Vergleich zu einem Abtast- oder Systemtakt der Recheneinheit zu sehen. Wird beispielsweise von einem Systemtakt von 390 MHz der Recheneinheit ausgegangen, so kann bei 8-facher Abtastrate eine Abtastung mit einer effektiven Abtastrate von 3,12 Gigasamples pro Sekunde erfolgen. Hierdurch wird eine sehr genaue Abtastung und damit Bestimmung der Phasenlage möglich.

Die z.B. 8-fache Abtastrate kann insbesondere dadurch erzielt werden, dass die Abtastung neben den bevorzugt durch den Systemtakt oder den Abtasttakt vorgegebenen Zeitpunkten auch zu jeweils versetzten Zeitpunkten erfolgt.

Allgemein kann die Vorrichtung ausgebildet sein, aus dem Abtast- oder Systemtakt, z.B. mittels einer weiteren PLL-Schaltung, mehrere (z.B. vier) zu dem Abtast- oder Systemtakt phasenverschobene Zusatzsignale zu erzeugen, die dann ebenfalls zur Abtastung der Flanken des Empfangstaktsignals eingesetzt werden. Die Phasenverschiebung der Zusatzsignale kann insbesondere 45°, 90°, 135°, 225°, 270° und/oder 315° betragen. Die Phasenverschiebung für die Zusatzsignale kann insbesondere durch eine SERDES-Einheit (Serializer-Deserializer-Einheit) erzeugt werden, welche z.B. in vielen FPGAs verfügbar ist. Durch die Zusatzsignale kann das Empfangstaktsignal abgetastet werden, insbesondere können mehreren Flanken im Verbund abgetastet werden.

Allgemein gesprochen kann die Abtastrate und insbesondere die effektive Abtastrate, größer sein als 1 Gigasamples pro Sekunde, 2 Gigasamples pro Sekunde oder 3 Gigasamples pro Sekunde.

Gemäß einer weiteren Ausführungsform wird aus den in mehreren Abtastvorgängen ermittelten Phasenlagen eine finale Phasenlage erzeugt, insbesondere durch Histogrammbildung.

Insbesondere werden die Abtastpunkte, bevorzugt kohärent, zum System- oder Abtasttakt akkumuliert. Eine vorbestimmte Zeitsequenz, beispielsweise eine vorbestimmte Anzahl von Taktzyklen (d.h. von Flanken im Verbund) des Empfangstaktsignals wird abgetastet, d.h. die Abtastung wird z.B. N-mal wiederholt. Dabei werden bei jedem Abtastvorgang zum Zeitpunkt t(0...n) die binären Zustände zum Zeitpunkt t akkumuliert. So entsteht ein Histogramm der Tiefe N. Bevorzugt wird (zumindest auch) aus der finalen Phasenlage der Abstand zwischen der ersten Vorrichtung und der zweiten Vorrichtung ermittelt. Unter der finalen Phasenlage ist also das Ergebnis der Ermittlung der Phasenlage zu verstehen. Die finale Phasenlage geht dann in die Ermittlung bzw. Berechnung des Abstandes zwischen der ersten und der zweiten Vorrichtung ein.

Insbesondere wird das Histogramm durch, bevorzugt kohärente, Akkumulation von mehreren Abtastvorgängen über ein Messintervall von beispielsweise 10 $\mu$s erzeugt. Bei der Akkumulation werden insbesondere Flankenpositionen aus einer Vielzahl von Abtastvorgängen in das Histogramm eingetragen. Insbesondere kann das Histogramm beispielsweise 10, 100 oder 1000 Abtastvorgänge umfassen.

Beispielsweise können jeweils vier Flanken in einem Abtastvorgang abgetastet und in das Histogramm eingetragen werden. Insbesondere kann die Phasenlage dann anhand z.B. der dritten steigenden Flanke in dem Histogramm bestimmt werden. Die finale Phasenlage wird dementsprechend durch z.B. die dritte steigende Flanke definiert.

Grundsätzlich kann der Abstand aber auch aus einer nach einem jeweiligen Verarbeitungsschritt vorliegenden Phasenlage ermittelt werden, wird bevorzugt aber aus der finalen Phasenlage ermittelt.

Die weiter oben beschriebene Abtastung mehrerer Flanken kann vorteilhaft sein, da sich die Sequenz (fallende/steigende Flanke) nach der Zeit eines Takts des Empfangstaktsignals wiederholt. Wenn sich die (weiter unten noch beschriebene) Grobmessung basierend auf Sende- und Empfangszeitpunkten ändert, beispielsweise im Least Significant Bit (LSB) wird dies bevorzugt in der Phasenmessung berücksichtigt, indem für die Ermittlung der finalen Phasenlage auf eine andere steigende Flanke gewechselt wird. Da dieser Wechsel sowohl in positiver als auch in negativer Richtung auftreten kann, ist es vorteilhaft, wenn der Verbund mindestens drei (steigende) Flanken umfasst.

Bevorzugt wird der Abstand zwischen erster und zweiter Vorrichtung wiederholt bestimmt, z.B. zumindest alle 1$\mu$s, alle 10$\mu$s oder alle 100$\mu$s. Die vorgenannten Zeiten sind klein genug, dass eine Phasendrift der Systemtakte noch zu keiner relevanten Verfälschung des gemessenen Abstands führt. Die erste und die zweite Vorrichtung bleiben insbesondere jeweils in Sichtweite, sodass dadurch eine kontinuierliche Abstandsmessung erfolgen kann. Verschiebt sich die Position der zur Abstandsbestimmung verwendeten Flanke im Histogramm, so wird auch ein neuer Abstandswert generiert. Verschiebt sich die Position der zur Abstandsbestimmung verwendeten Flanke im Histogramm stärker, sodass diese Flanke an den Rand des Histogramms gerät oder sogar aus dem Histogramm verschwindet, so wird dann eine benachbarte (steigende) Flanke für die Bestimmung des Abstands herangezogen.

Gemäß einer weiteren Ausführungsform wird der Abstand zwischen der ersten Vorrichtung und der zweiten Vorrichtung zusätzlich basierend auf in dem Datensignal codierten Zeichen ermittelt.

Durch die Ermittlung des Abstands basierend auf der Phasenlage des Empfangstaktsignals kann eine sehr genaue Abstandsmessung erfolgen, welche aber für größere Abstände uneindeutig sein kann. Aus diesem Grund kann für die Erzeugung eines eindeutigen Abstands auch zusätzlich auf eine (gröbere) Abstandsmessung basierend auf in dem Datensignal codierten Zeichen zurückgegriffen werden. Dies kann beispielsweise über den nachfolgend noch detaillierter beschriebenen Zeitstempelaustausch erfolgen. Wird davon ausgegangen, dass die Zeitauflösung über den Zeitstempelaustausch bei einem Drittel des Systemtakts (390 MHz/3 = 130 MHz) liegt, beträgt die Zeitauflösung 7,7 ns. Dies entspricht einer Distanzauflösung von 2,3 m.

In dem Datensignal können die übertragenen Zeichen beispielsweise als codierte Datenworte vorliegen, welche insbesondere mit dem 8B10B-Verfahren codiert sind. Eine solche Codierung besitzt den Vorteil, dass das optische Signal keinen Gleichanteil besitzt. Alternativ kann auch z.B. der 16B18B-Code oder der 64B66B-Code zur optischen Datenübertragung zwischen der ersten und zweiten Vorrichtung genutzt werden. Allgemein kann auch eine andere Codierung ohne Gleichanteil gewählt werden.

Gemäß einer weiteren Ausführungsform umfasst die Ermittlung des Abstands basierend auf dem in dem Datensignal codierten Zeichen die folgenden Schritte:

- die erste Vorrichtung sendet an die zweite Vorrichtung ein erstes Datensignal, welches den Sendezeitpunkt $t_{SycA}$ des ersten Datensignals (als codierte Zeichen) enthält und/oder definiert,
- die zweite Vorrichtung den Empfangszeitpunkt $t_{RecB}$ des ersten Datensignals abspeichert,
- die zweite Vorrichtung an die erste Vorrichtung ein zweites Datensignal sendet, welches den Sendezeitpunkt $t_{SycB}$ des zweiten Datensignals (als codierte Zeichen) enthält und/oder definiert,
- die erste Vorrichtung den Empfangszeitpunkt $t_{RecA}$ des zweiten Datensignals abspeichert.

Die Empfangszeitpunkte $t_{RecA}$ und $t_{RecB}$ können der jeweils anderen Vorrichtung mitgeteilt werden, bevorzugt über das Datensignal. Insbesondere kann ein Sendezeitpunkt durch das Aussenden eines Datensignals definiert, d.h. festgelegt, werden, wobei der Sendezeitpunkt auch erst nachgelagert der jeweils anderen Vorrichtung mitgeteilt werden kann.

Allgemein können die beiden Vorrichtungen die Empfangszeitpunkte und/oder die Sendezeitpunkte über das Datensignal miteinander austauschen. Beispielsweise können im gleichen Raster, d.h. im gleichen zeitlichen Abstand, mit dem aus der Phasenlage des Empfangstaktsignals der Abstand der beiden Vorrichtungen ermittelt wird (z.B. 10μs), auch die Empfangszeitpunkte und/oder die Sendezeitpunkte ausgetauscht werden. Die Empfangszeitpunkte und/oder die Sendezeitpunkte sind beispielsweise Zählerstände, welche mit dem Systemtakt generiert werden. Durch die Synchronität des Austauschs von Empfangszeitpunkten und/oder Sendezeitpunkten und der Ermittlung der Phasenlage, kann der Abstand zwischen den beiden Vorrichtungen besonders genau ermittelt werden.

Die Lichtlaufzeit (Time Of Flight) kann insbesondere nach der folgenden Formel berechnet werden:

[Formel 1]

$$TOF\_A = 1/2 \; [(t_{RecA} - t_{SycB}) + (t_{RecB} - t_{SycA})].$$

Der Abstand zwischen den Vorrichtungen kann dann durch die Multiplikation der Lichtlaufzeit mit der Lichtgeschwindigkeit ermittelt werden.

Es versteht sich, dass in dem vorstehend beschriebenen Vorgehen auch die erste und die zweite Vorrichtung jeweils vertauscht werden können.

Durch Bauteiltoleranzen und andere Einflüsse kann die Zeitbasis von erster und zweiter Vorrichtung verschieden sein. Der Offset zwischen der Zeitbasis der ersten Vorrichtung und der Zeitbasis der zweiten Vorrichtung kann nach der folgenden Formel berechnet werden:

[Gleichung 2]

$$Offset = 1/2 \; [(t_{RecA} - t_{SycB}) - (t_{RecB} - t_{SycA})]$$

Die Abstandsmessung basierend auf Sende- und Empfangszeitpunkten kann auch als Grobmessung bezeichnet werden, wohingegen die Abstandsmessung basierend auf dem Empfangstaktsignal eine Feinmessung darstellen kann.

Durch die Grobmessung kann dann ein Abstandsbereich definiert werden, in welchem der Abstand von erster und zweiter Vorrichtung ungefähr liegt. Basierend auf der Abstandsmessung auf dem Empfangstaktsignal kann dann innerhalb des so ermittelten "Fensters" von Abständen der korrekte Abstand ermittelt werden. Durch die Grobmessung kann dementsprechend eine uneindeutige feine Messung basierend auf dem Empfangstaktsignal eindeutig werden.

Zur Initialisierung der Abstandsmessung, d.h. zum Verbindungsaufbau zwischen erster und zweiter Vorrichtung, kann ein spezielles Komma-Wort übertragen werden. Da sich im normalen bzw. linearen Verfahrbetrieb die beiden Send- und Empfangseinrichtungen bevorzugt immer sehen und damit auch der ständige Austausch von Datensignalen gewährleistet ist, reicht es aus, beim Verbindungsaufbau einmalig die im Histogramm auszuwertende steigende Flanke zu bestimmen. Um bei einer Neu-Synchronisation auch die richtige Flanke auszuwerten, ist es notwendig, zu Beginn einen doppelt so schnellen Takt für den Zeitstempelaustausch zu Generieren oder mit einer Zweifachmessung und einem phasenverschobenen Takt diese Eindeutigkeit herzustellen. Der doppelt so schnelle Takt kann z.B. durch eine vorübergehende Verwendung einer doppelten Zählrate für die Zählerstände, welche die Sende- und/oder Empfangszeitpunkte angeben, erzielt werden.

Durch eine Phasendrift zwischen den Systemtakten der beiden Vorrichtungen kann ein Verwischen im Histogramm erfolgen. Da dies unerwünscht ist, können die erste und die zweite Vorrichtung derart ausgebildet sein, dass innerhalb eines Messintervalls von 10 µs eine Phasendrift der Systemtakte von erster und zweiter Vorrichtung weniger als 200 ps, bevorzugt weniger als 100 ps, weiter bevorzugt weniger als 50 ps beträgt.

Um einen Fehler in dem ermittelten Abstand, welcher aufgrund der Phasendrift zwischen den Systemtakten entsteht, auszugleichen, können die beiden Vorrichtungen jeweils separat den Abstand zwischen erster und zweiter Vorrichtung bestimmen, den bestimmten Abstand dann über das Datensignal austauschen und einen Mittelwert der beiden Abstandswerte bilden.

Gemäß einer weiteren Ausführungsform erfolgt das Empfangen des Datensignals und das Erzeugen des Empfangstaktsignals sowie die Ermittlung der Phasenlage des Empfangstaktsignals durch dieselbe Steuereinheit und insbesondere durch denselben FPGA. Wie beschrieben, kann alternativ anstelle eines FPGAs auch ein ASIC oder eine andere integrierte Schaltung verwendet werden.

Durch die Verwendung derselben Steuereinheit kann basierend auf demselben Systemtakt der Steuereinheit sowohl die Ermittlung des Abstands basierend auf dem Datensignal der codierten Zeichen als auch die Erfassung der Phasenlage erfolgen. Hierdurch werden Ungenauigkeiten durch verschiedene Takte reduziert, was die Genauigkeit der Abstandsmessung wiederum erhöht und die Hardwareanforderungen reduziert.

Die Erfindung betrifft weiterhin eine Vorrichtung zur simultanen Datenübertragung und Abstandsmessung, wobei die Vorrichtung eine zur optischen Datenübertragung ausgebildete Sendeeinrichtung, eine zur optischen Datenübertragung ausgebildete Sendeeinrichtung, eine zum optischen Datenempfang ausgebildete Empfangseinrichtung und eine mit der Steuereinrichtung und der Empfangseinrichtung gekoppelte und/oder zumindest zum Teil integrierte Steuereinheit aufweist, wobei die Vorrichtung ausgebildet ist, insbesondere mittels der Empfangseinrichtung, ein Datensignal von einer zweiten Vorrichtung zu empfangen. Erfindungsgemäß ist die Vorrichtung ausgebildet, aus dem Datensignal ein Empfangstaktsignal zu erzeugen, welches Takt-Informationen des Datensignals angibt, wobei die Vorrichtung zudem ausgebildet ist, die Phasenlage des Empfangstaktsignals zu ermitteln und, insbesondere zumindest, aus der Phasenlage den Abstand zwischen der Vorrichtung und der zweiten Vorrichtung zu ermitteln.

Weiterer Gegenstand der Erfindung ist ein System umfassend zwei Vorrichtungen der vorstehenden Art, von welchen eine als erste Vorrichtung und eine als zweite Vorrichtung fungiert. Die erste und zweite Vorrichtung können in direkter Sichtverbindung zueinander angeordnet sein. Zumindest eine der Vorrichtungen kann auf einem, insbesondere autonomen, Fahrzeug angeordnet sein.

In dem System kann ein zusätzlicher Kommunikationskanal zwischen der ersten Vorrichtung und der zweiten Vorrichtung vorgesehen sein, welcher zur Temperaturkompensation und insbesondere zur Kompensation einer Temperaturdrift der Systemtakte gegeneinander dient. Der zusätzliche Kanal kann beispielsweise ebenfalls zur optischen Datenübertragung aber auch zur Funk-Datenübertragung ausgebildet sein. Durch die Kompensation der Temperaturdrift können Unterschiede in den Systemtakten der Vorrichtungen weiter kompensiert werden, was eine noch genauere Messung des Abstands ermöglicht. Über den zusätzlichen Kanal können z.B. eine jeweilige Gerätetemperatur und/oder Korrekturwerte für die Gerätetemperatur übermittelt werden. Anhand dieser Werte kann dann die Temperaturdrift kompensiert werden.

Die Ausführungen zu dem erfindungsgemäßen Verfahren gelten für die erfindungsgemäße Vorrichtung und das erfindungsgemäße System entsprechend. Dies gilt insbesondere hinsichtlich Ausführungsformen und Vorteilen. Überdies versteht es sich, dass sämtliche hierin genannten Merkmale miteinander kombinierbar sind, sofern nicht explizit etwas Gegenteiliges angegeben ist.

Nachfolgend wird die Erfindung nun rein beispielhaft unter Bezugnahme auf die Zeichnungen beschrieben. Es zeigen:

Fig. 1    eine schematische Darstellung eines fahrerlosen Transportsystems;

Fig. 2    schematisch den internen Aufbau einer Vorrichtung zur Abstandsmessung;

Fig. 3    die Übermittlung von Datensignalen zur Abstandsmessung; und

Fig. 4    zeigt ein Histogramm zur Erfassung der Position von Flanken.

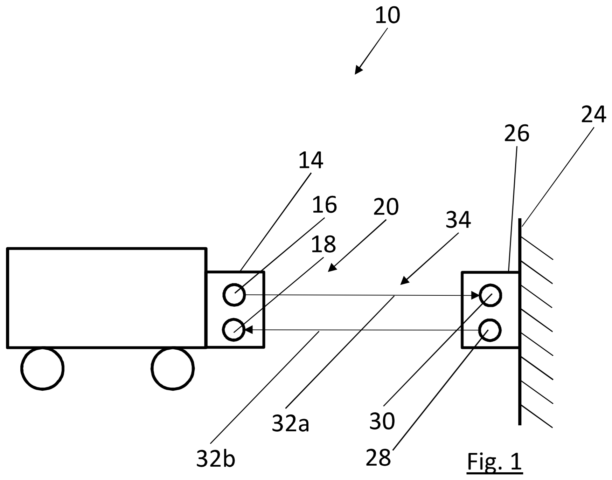

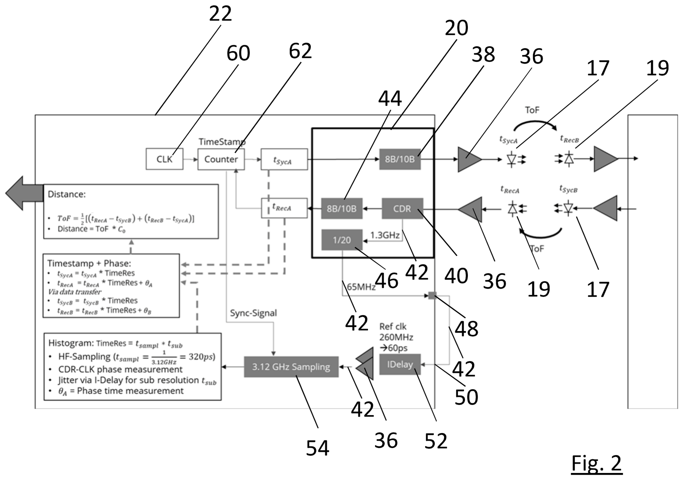

Fig. 1 zeigt schematisch ein fahrerloses Transportsystem 10 mit einem Regalbediengerät (RBG) 12 als fahrerlosem Transportfahrzeug. An dem RBG 12 ist eine erste Vorrichtung 14 angebracht, die eine erste Sendeeinrichtung 16 sowie eine erste Empfangseinrichtung 18 umfasst. Die erste Sendeeinrichtung 16 weist eine Lichtquelle 17 in Form einer Laserdiode oder LED auf, wie in Fig. 2 gezeigt. Die erste Empfangseinrichtung 18 umfasst einen Lichtempfänger 19, in Form einer Fotodiode, wie ebenfalls in Fig. 2 dargestellt. Die erste Sendeeinrichtung 16 und die erste Empfangseinrichtung 18 zusammen bilden einen Transceiver 20.

Die erste Vorrichtung umfasst ferner eine (in Fig. 2 dargestellte) Steuereinheit 22, welche den Transceiver 20 zumindest zum Teil umfasst.

Ortsfest, beispielsweise an einer Mauer 24, ist eine zweite Vorrichtung 26 angebracht. Die zweite Vorrichtung 26 ist identisch zu der ersten Vorrichtung 14 ausgebildet und umfasst dementsprechend eine zweite Sendeeinrichtung 28, eine zweite Empfangseinrichtung 30, sowie eine (nicht gezeigte) Steuereinheit.

Die erste Vorrichtung 14 und die zweite Vorrichtung 26 sind derart ausgerichtet, dass die erste Sendeeinrichtung 16 ein mittels eines Lichtstrahls übertragenes Datensignal 32a an die zweite Empfangseinrichtung 30 überträgt. Entsprechend überträgt die zweite Sendeeinrichtung 28 ein zweites Datensignal 32b an die erste Empfangseinrichtung 18. Das optische Datensignal 32 kann insbesondere eine Datenrate von 1,3 Gigabit pro Sekunde aufweisen.

Das erste Datensignal 32a und das zweite Datensignal 32b bilden gemeinsam einen Übertragungskanal 34, über welchen binär codierte Nutzdaten, beispielsweise mittels Rechteckpulsen, übertragen werden.

Fig. 2 zeigt nun die erste Vorrichtung 14 und die zweite Vorrichtung 26 in detaillierterer Darstellung. Insbesondere ist der interne Aufbau der zweiten Vorrichtung 26 genauer dargestellt. Die zweite Vorrichtung 26 umfasst zum Senden eines Datensignals 32 die bereits genannte Lichtquelle 17, welche über einen Verstärker 36 mit einem 8B10B-Encoder 38 gekoppelt ist, welcher von der Steuereinheit 22 erzeugte Datensignale in das 8B10B-Format codiert.

Zum Empfang von optischen Datensignalen von der ersten Vorrichtung 14 umfasst die zweite Vorrichtung 26 einen Lichtempfänger 19, welcher wiederum über einen Verstärker 36 mit einem CDR-Block 40 (Clock-Data-Recovery-Block) gekoppelt ist. Der CDR-Block 40 extrahiert aus dem Datensignal 32 ein Empfangstaktsignal 42, welches zunächst entsprechend der Datenrate des Datensignals 32 eine Frequenz von 1,3 GHz aufweist.

Der CDR-Block 40 erzeugt zudem einen seriellen Datenstrom, welcher durch einen 8B10B-Decoder 44 wieder in das ursprünglich von der ersten Vorrichtung verwendete Format decodiert wird. Aus dem so decodierten Signal kann dann z.B. ein Empfangs- oder ein Sendezeitpunkt bestimmt werden, z.B. $t_{RecA}$.

Das Empfangstaktsignal 42 wird an einen 20 Bit Seriell-zu-Parallel-Umsetzer 46 übermittelt. Der Seriell-zu-Parallel-Umsetzer 46 teilt die Frequenz des Empfangstaktsignals um den Faktor 20 herunter, so dass das Empfangstaktsignal 42 nun mit einer Frequenz von 65 MHz vorliegt. Das Empfangstaktsignal 42 wird dann über einen Ausgangspin 48 aus der Steuereinheit 22 ausgegeben und direkt über einen Eingangspin 50 wieder in die Steuereinheit 22 eingetastet. Ausgangspin 48 und Eingangspin 50 können zu diesem Zweck direkt elektrisch miteinander verbunden sein.

Von dem Eingangspin 50 wird das Empfangstaktsignal 42 dann einem Verzögerungsglied 52 zugeführt und danach wiederum durch Verstärker 36 verstärkt. Das Verzögerungsglied 52 führt zu einer absichtlichen bzw. künstlichen Reduzierung der Flankensteilheit der in dem Empfangstaktsignal 42 enthaltenen Flanken.

Abschließend wird das Empfangstaktsignal 42 einer DDR-Schaltung 54 zugeführt, welche jeweils vier Takte mit zwei Flanken des Empfangstaktsignals abtastet, so dass sich eine Abtastrate von 3,12 Gigasamples pro Sekunde ergibt (Verachtfachung eines Taktes von 390 MHz).

Für das Abtasten des Empfangstaktsignals 42 empfängt die DDR-Schaltung 54 ein Taktsignal, welches von einem Taktgeber 60 der Steuereinheit 22 erzeugt wird. Das Taktsignal wird auch einem Counter 62 zugeführt, welcher als interne Uhr der jeweiligen Vorrichtung 14, 26 dient. Über den Counter 62 ist es zudem möglich, für gesendete oder empfangene Daten den Sendezeitpunkt (in Fig. 2 $t_{SycA}$) bzw. den Empfangszeitpunkt ($t_{RecA}$) zu ermitteln.

Die abgetasteten Flanken werden dann über einen Abtastzeitraum von beispielsweise 10 μs in ein Histogramm 56 aufgetragen. Ein solches Histogramm 56 ist in Fig. 4 näher dargestellt. In dem Histogramm 56 sind vier steigende Flanken eingetragen. In dem Histogramm 56 ist die N/2-Schwelle 58 eingezeichnet. Die Position einer jeweiligen Flanke wird mittels Interpolation auf den Schnittpunkt mit der N/2-Schwelle 58 ermittelt, wodurch sich eine picosekundengenaue Auflösung ergibt. Insbesondere kann, wie in Fig. 4 gezeigt, auf die dritte steigende Flanke geloggt werden. Die Position dieser Flanke kann dann die finale Phasenlage angeben.

Durch die Ermittlung der Position der Flanke des Empfangstaktsignals 42 ist die Phasenlage des Empfangstaktsignals 42 bekannt, wobei über die Phasenlage dann eine Feinmessung des Abstands zwischen der ersten Vorrichtung 14 und der zweiten Vorrichtung 26 ermöglicht wird. Da in die Phasenmessung (bzw. in das Histogramm) vier Flanken eingehen, kann der Gesamtmessbereich in der Phasenmessung z.B. 4 x 15,4 ns, d.h. 4 x 4,6 m betragen. Dies ist mehr als der Uneindeutigkeitsbereich bei der später noch beschriebenen Grobmessung.

Die Grobmessung wird nun unter Bezugnahme auf Fig. 3 beschrieben. In dem in Fig. 3 dargestellten Beispiel wird die Grobmessung von der zweiten Vorrichtung 26 initiiert. Zur Vereinfachung und zur Verwendung derselben Formeln wie oben angegeben, wird die zweite Vorrichtung 26 im Nachfolgenden auch als Device A und die erste Vorrichtung 14 als Device B bezeichnet.

In Fig. 3 ist zu erkennen, dass die erste Vorrichtung 14 und die zweite Vorrichtung 26 unterschiedliche Zeitbasen besitzen. Zum Zeitpunkt 0 ns in der zweiten Vorrichtung 26 steht eine interne Uhr der ersten Vorrichtung 14 bereits auf 68 ns.

Zur Grobmessung sendet die zweite Vorrichtung 26, d.h. das Device A, zum Zeitpunkt $t_{SycA}$ (0 ns) ein erstes Datensignal 32a an die erste Vorrichtung. Dieses wird nach 30 ns an der ersten Vorrichtung 14 empfangen, deren interne Uhr dann bei 98 ns steht. Dieser Zeitpunkt wird als $t_{RecB}$ in der ersten Vorrichtung 14 abgespeichert. Die erste Vorrichtung schickt dann 10 ns später ein zweites Datensignal 32b an die zweite Vorrichtung 26, wobei der Sendezeitpunkt als $t_{SycB}$ (108 ns) und der Empfangszeitpunkt (70 ns) des zweiten Datensignals 32b als $t_{RecA}$ abgespeichert werden.

Über die so ermittelten Sende- und Empfangszeitpunkte kann über die Formel

$$TOF\_A = 1/2\,[(t_{RecA} - tSycB) + (tRecB - t_{SycA})].$$

dann die Lichtlaufzeit des Datensignals 32 ermittelt werden. Im vorliegenden Beispiel beträgt die Lichtlaufzeit 30 ns. Die Ungenauigkeit bzw. die Distanzauflösung bei der Grobmessung kann dabei im Bereich von 2,3 m liegen, wenn die Zeitauflösung für den Zeitstempelaustausch beispielsweise bei 7,7 ns liegt.

Durch die Feinmessung mittels des Histogramms kann dann zusätzlich eine Genauigkeit von beispielsweise 10 ps erzielt werden, wodurch die Distanzauflösung auf 3 mm erhöht wird. Es kann also eine deutliche Verbesserung der Distanzauflösung bei gleichzeitig sehr hohen Datenraten erzielt werden.

Bezugszeichenliste

| | |
|---|---|
| 10 | Transportsystem |
| 12 | RBG |
| 14 | erste Vorrichtung |
| 16 | erste Sendeeinrichtung |
| 17 | Lichtquelle |
| 18 | erste Empfangseinrichtung |
| 19 | Lichtempfänger |
| 20 | Transceiver |
| 22 | Steuereinheit |
| 24 | Mauer |
| 26 | zweite Vorrichtung |
| 28 | zweite Sendeeinrichtung |
| 30 | zweite Empfangseinrichtung |
| 32 | Datensignal |
| 34 | Übertragungskanal |
| 36 | Verstärker |
| 38 | 8B10B-Encoder |
| 40 | DDR-Block |
| 42 | Empfangstaktsignal |
| 44 | 8B10B-Decoder |
| 46 | Seriell-zu-Parallel-Umsetzer |
| 48 | Ausgangspin |
| 50 | Eingangspin |
| 52 | Verzögerungsglied |
| 54 | DDR-Schaltung |
| 56 | Histogramm |
| 58 | N/2-Schwelle |
| 60 | Taktgeber |
| 62 | Counter |

**Patentansprüche**

1. Verfahren zur simultanen Datenübertragung und Abstandsmessung zwischen einer ersten Vorrichtung (14) und einer zweiten Vorrichtung (26), wobei die erste Vorrichtung (14) und die zweite Vorrichtung (26) jeweils eine zur optischen Datenübertragung ausgebildete Sendeeinrichtung (16, 28), eine zum optischen Datenempfang ausgebildete Empfangseinrichtung (18, 30) und eine mit der Sendeeinrichtung (16, 28) und der Empfangseinrichtung (18, 30) gekoppelte und/oder zumindest zum Teil integrierte Steuereinheit (22) aufweisen, wobei von der ersten Vorrichtung (14) an die zweite Vorrichtung (26) ein Datensignal (32) übertragen wird,
dadurchgekennzeichnet, dass
aus dem Datensignal (32) ein Empfangstaktsignal (42) erzeugt wird, welches Takt-Informationen des Datensignals (32) angibt, wobei die Phasenlage des Empfangstaktsignals (42) ermittelt wird und aus der Phasenlage der Abstand zwischen der ersten Vorrichtung (14) und der zweiten Vorrichtung (26) ermittelt wird.

**2.** Verfahren nach Anspruch 1,
wobei das Empfangstaktsignal (42) ein Clock-Data-Recovery-Signal, CDR-Signal, umfasst oder auf einem solchen basiert.

**3.** Verfahren nach Anspruch 1 oder 2,
wobei das Empfangstaktsignal (42) um einen vorbestimmten Faktor heruntergeteilt wird, bevorzugt durch einen Seriell- zu Parallelumsetzer (46).

**4.** Verfahren nach einem der vorstehenden Ansprüche,
wobei das Empfangstaktsignal (42) an einem Ausgang (48) der Steuereinheit (22) ausgegeben wird und bevorzugt an einem Eingang (50) der Steuereinheit (22) wieder eingetastet wird.

**5.** Verfahren nach einem der vorstehenden Ansprüche,
wobei das Empfangstaktsignal (42) eine Vielzahl von Flanken umfasst, wobei zur Ermittlung der Phasenlage zumindest zwei, bevorzugt drei, besonders bevorzugt vier, Flanken abgetastet und/oder ausgewertet werden.

**6.** Verfahren nach Anspruch 5,
wobei die Flankensteilheit von Flanken des Empfangstaktsignals (42) vor der Ermittlung der Phasenlage reduziert wird, bevorzugt durch ein Verzögerungsglied (52).

**7.** Verfahren nach einem der vorstehenden Ansprüche,
wobei zur Ermittlung der Phasenlage zumindest ein Abtastvorgang, insbesondere ein binärer Abtastvorgang, erfolgt, wobei bevorzugt jeweils mehrere Takte und/oder Flanken des Empfangstaktsignals (42) gleichzeitig oder gemeinsam abgetastet werden, bevorzugt durch eine Double-Data-Rate-Schaltung, DDR-Schaltung (54).

**8.** Verfahren nach einem der vorstehenden Ansprüche,
wobei aus den in mehreren Abtastvorgängen ermittelten Phasenlagen eine finale Phasenlage erzeugt wird, insbesondere durch Histogrammbildung und aus der finalen Phasenlage der Abstand zwischen der ersten Vorrichtung (14) und der zweiten Vorrichtung (26) ermittelt wird.

**9.** Verfahren nach einem der vorstehenden Ansprüche,
wobei der Abstand zwischen der ersten Vorrichtung (14) und der zweiten Vorrichtung (26) zusätzlich basierend auf in dem Datensignal (32) kodierten Zeichen ermittelt wird.

**10.** Verfahren nach Anspruch 9,
wobei zur Ermittlung des Abstands basierend auf in dem Datensignal (32) kodierten Zeichen

- die erste Vorrichtung (14) an die zweite Vorrichtung (26) ein erstes Datensignal (32) sendet, welches den Sendezeitpunkt tSycA des ersten Datensignals (32) enthält und/oder definiert,
- die zweite Vorrichtung (26) den Empfangszeitpunkt tRecB des ersten Datensignals (32) abspeichert,
- die zweite Vorrichtung (26) an die erste Vorrichtung (14) ein zweites Datensignal (32) sendet, welches den Sendezeitpunkt tSycB des zweiten Datensignals (32) enthält und/oder definiert,
- die erste Vorrichtung (14) den Empfangszeitpunkt tRecA des zweiten Datensignals (32) abspeichert.

**11.** Verfahren nach einem der vorstehenden Ansprüche,
wobei das Empfangen des Datensignals (32) und das Erzeugen des Empfangstaktsignal (42) sowie die Ermittlung der Phasenlage des Empfangstaktsignals (42) durch dieselbe Steuereinheit (22) und insbesondere durch denselben FPGA erfolgt.

**12.** Vorrichtung (14) zur simultanen Datenübertragung und Abstandsmessung, wobei die Vorrichtung eine zur optischen Datenübertragung ausgebildete Sendeeinrichtung (16, 28), eine zum optischen Datenempfang ausgebildete Empfangseinrichtung (18, 30) und eine mit der Sendeeinrichtung (16, 28) und der Empfangseinrichtung (18, 30) gekoppelte Steuereinheit (22) aufweist, wobei die Vorrichtung ausgebildet ist, ein Datensignal (32) von einer zweiten Vorrichtung (26) zu empfangen,
dadurchgekennzeichnet, dass
die Vorrichtung (14) ausgebildet ist, aus dem Datensignal (32) ein Empfangstaktsignal (42) zu erzeugen, welches Takt-Informationen des Datensignals (32) angibt, wobei die Vorrichtung zudem ausgebildet ist, die Phasenlage des Empfangstaktsignals (42) zu ermitteln und aus der Phasenlage den Abstand zwischen der Vorrichtung (14) und der zweiten Vorrichtung (26) zu ermitteln.

13. System umfassend zwei Vorrichtungen (14, 26) gemäß Anspruch 12, von welchen eine als zweite Vorrichtung (26) fungiert.

Fig. 1

Fig. 2

0 ns

68 ns

98 ns

108 ns

70 ns

<u>Fig. 3</u>

56

Histogramm

58

N-Iteration

Abtastsample

<u>Fig. 4</u>

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014111589 A1